# EUROPEAN PATENT SPECIFICATION

(11) **EP 3 981 687 B1**
(45) Date of publication and mention of the grant of the patent: **07.06.2023**
(21) Application number: 21204715.3
(22) Date of filing: 22.09.2020
(51) Int. Cl.: B64D 17/80, B64D 17/72

(54) **BALLISTICALLY-DEPLOYED CONTROLLABLE PARASAIL**
BALLISTISCH ENTFALTETER STEUERBARER GLEITSCHIRM
PARAVOILE COMMANDABLE À DÉPLOIEMENT BALISTIQUE

(30) Priority: 30.09.2019 US 201916588558
(43) Date of publication of application: 13.04.2022
(62) Divisional of application: 20197612.3
(73) Proprietor: Honeywell International Inc., Charlotte, NC 28202 (US)
(72) Inventor: DRISCOLL, Kevin Raymond, Charlotte, North Carolina, 28202 (US); HALL, Brendan, Charlotte, North Carolina, 28202 (US); ELGERSMA, Michael Ray, Charlotte, North Carolina, 28202 (US)
(74) Representative: Haseltine Lake Kempner LLP

(56) References cited:
- WO-A1-2017/164666
- US-A- 3 796 398
- US-A- 6 144 899
- US-A1- 2019 033 861

## Description

### BACKGROUND

Emerging technology enable operation of vehicles such as air taxis and delivery drones at low altitudes and in densely populated areas. One issue plaguing the roll-out of these vehicles is the potential catastrophic injury to people and property if the primary propulsion mechanisms of these vehicles fail during operation. Some have proposed that the vehicles could be provided with parachutes. However, parachutes fail to provide immediate support to vehicles and often require the vehicle to fall a sufficient amount before the drag of the parachute reduces the downward velocity of the vehicle. Furthermore, these parachutes may cause the vehicle to collide with nearby structures and people. When parachutes inflate in dense urban environments, the parachute may catch in the windy regions present in the urban environment, causing the vehicle to be at the whim of the wind. Therefore, there is a need for a more robust means to aid vehicles when primary propulsion mechanisms fail beyond the traditional parachute.

WO2017/164666A1 discloses an unmanned aerial vehicle comprising: a body; an imaging device mounted in the body; a sensing unit for sensing a current state of the body; and a controller communicating with the imaging device and the sensing unit, wherein, when determining an abnormal state of the body, the controller selects at least one safe position by using a ground image acquired by the imaging device and moves the body to the safe position.

US3796398A discloses an in-flight aircraft recovery system utilizing an inflatable wing of generally rectangular planform configuration stowed in a normally collapsed condition in a compartment located on the upper portion of the fuselage in the vicinity of the plane's center of gravity.

US6144899A discloses a recoverable airborne instrument platform that determines its present position and uses this data to execute a predetermined flight plan and ultimately guide its descent to a predetermined landing site.

US2019/033861A1 discloses a method including: operating a vehicle, planning for contingencies, detecting undesired flight conditions, and reacting to undesired flight conditions.

### SUMMARY

The present invention is defined by the independent claims, to which reference should now be made. Advantageous embodiments are set out in the dependent claims. The Embodiments of the present invention provide methods and systems for a recovery system and will be understood by reading and studying the following specification.

### DRAWINGS

Embodiments of the present invention can be more easily understood and further advantages and uses thereof more readily apparent, when considered in view of the description of the preferred embodiments and the following figures in which:
Figure 1 is a diagram of one embodiment of a vehicle and emergency recovery system with a parasail.
Figure 2 is a block diagram of an example embodiment of an emergency recovery system.
Figure 3 is a block diagram of an example embodiment of a vehicle with an emergency recovery system.
Figure 4A is a diagram of an example of the implementation of the guidance provided by the emergency recovery system.
Figure 4B is a diagram of an example of the implementation of the guidance provided by the emergency recovery system at a different angle.
Figure 5A is a diagram of an example implementation of the guidance provided by the emergency recovery system.
Figure 5B is a diagram of an example of the implementation of the guidance provided by the emergency recovery system at a different angle.
Figure 6 is a diagram of an example embodiment of the three-dimensional map.
Figure 7 is a flow chart diagram of an example embodiment of a method of using the emergency recovery system.

In accordance with common practice, the various described features are not drawn to scale but are drawn to emphasize features relevant to the present invention. Reference characters denote like elements throughout figures and text.

### DETAILED DESCRIPTION

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

The future of urban transportation continues to resemble the lofty world of the Jetsons with personal air mobility vehicles being used for low altitude urban travel. Air mobility vehicles, for example quad-copters, hexa-copters, octo-copters, and personal planes, are set to potentially replace land-based transportation for ride-share commutes in urban environments. These air mobility vehicles generally contain internal redundancies to protect against in-flight failures; however, internal redundancies inherently cannot prevent all catastrophic failures.

Many proposed air mobility vehicles will operate at relatively low altitudes between 121.92 m and 182.88 m (400 ft and 600 ft) in altitude. This reduces the effectiveness of traditional parachute systems which may require the vehicle to fall a distance of 182.88 m (600 ft) or more before the parachute will slow the descent of the vehicle.

What is described herein is an emergency recovery system with an externally mounted, ballistically-deployed parasail capable of catching a vehicle at low altitude and gliding the vehicle safely to the ground. In normal operation, the parasail is compactly stored within a housing external to the vehicle. The parasail includes a release mechanism such as a releasable fastener that is triggered either manually or automatically through a failsafe system. For example, the parasail could be fastened using an electromagnet clamp or through a latch. Once released, the parasail is ballistically deployed from the external housing, expanding out of the external housing while remaining connected through load bearing supports. As the parasail separates from the external housing, it rapidly expands, suspending the emergency recovery system attached to the vehicle. Once suspended from the parasail, the emergency recovery system uses systems and processes stored within the emergency recovery system to direct the parasail to control the glide to a landing area. Thus, the vehicle remains safe during an emergency landing, as the parasail both suspends the vehicle before the vehicle has a chance to fall due to gravity and directs the vehicle to a safe location for landing.

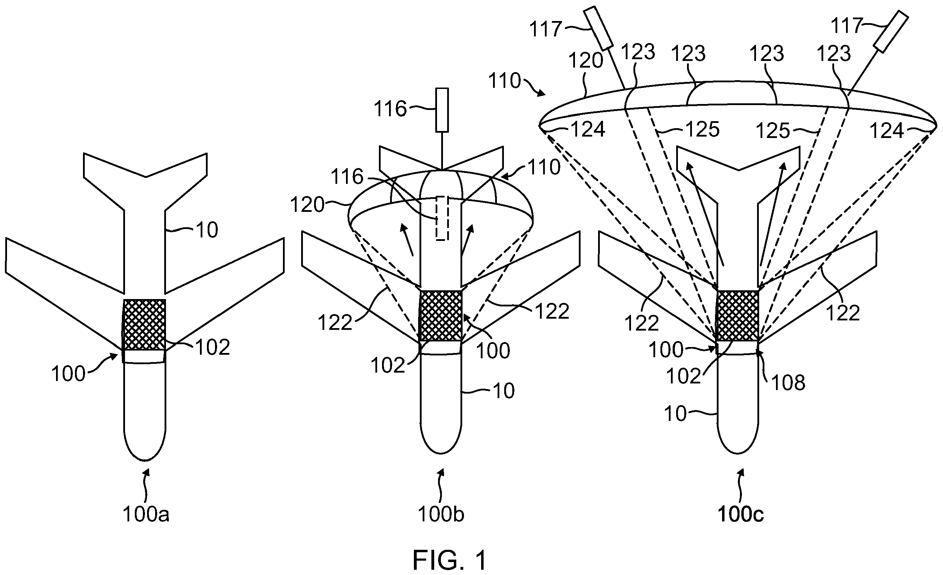

In the example shown in Figure 1, an emergency recovery system 100 is attached to a vehicle 10, shown in three exemplary stages of operation: enclosed 100a, mid-launch 100b, and fully expanded 100c. In some examples, the emergency recovery system 100 relies only on components and systems stored within the emergency recovery system 100. The emergency recovery system 100 is configured to launch primary ballistics 116 to pull a parasail 110 from within the emergency recovery system housing 102. While the emergency recovery system remains enclosed within the emergency recovery system (ERS) housing 102, the primary ballistics 116 and the parasail 110 are compactly stowed. In some examples, at least one releasable fastener is attached to the ERS housing 102. In other examples, the ERS housing 102 comprises at least one releasable fastener. The ballistics system 208 and parasail 110 are stowed such that the primary ballistics 116 pulls the parasail 110 from the housing 102 and the parasail 110 simultaneously begins to unfold. The ballistics system 208 comprises a form of explosion or compressed force sufficient to rapidly deploy the parasail 110. In some examples, the primary ballistics 116 activates from above the attached parasail 110, pulling the parasail 110 from the housing. In another example, the primary ballistics 116, shown with dashed boarder, activates from below the parasail 110, effectively pushing the parasail 110 from a structured point of the canopy 120.

Generally, the parasail 110 comprises a canopy 120 attached to the housing 102 of the emergency recovery system 100 with one or more load bearing supports 122. In the example shown in Figure 1, the one or more load bearing supports 122 couple to the canopy 120 at a load receiver point 124, and in some embodiments along one or more structural ridges 123 of the canopy 120, such as the load bear supports 125 attached to the one or more structural ridges 123. The structural ridges 123 may provide the canopy 120 with structure when fully expanded and may provide form necessary for control while the parasail 110 glides. The one or more load bearing supports 122 may couple to the parasail 110 through bolts, holes in the canopy 120, and/or applied adhesives. The canopy 120 comprises generally a thin, lightweight material configured to be flexible yet retain shape while under tension. When in use, the unfolded canopy 120 stretches to resemble a parasail - triangular or rectangular shape; however, it should be understood that the canopy 120 can resemble any appropriate shape. The shape of the parasail 110 and location of the one or more load bearing supports 122 may affect the control provided by use of the flight controls and actuators 108 on the parasail 110. The canopy 120 should be sufficiently large such that lift generated by the parasail 110 meaningfully counteracts the weight of the emergency recovery system 100 and attached vehicle 10.

In the example shown in Figure 1, the one or more load bearing supports 122, *e.g.* cables, couple, on the opposite end from the canopy 120, to the emergency recovery system (ERS) housing 102 at one or more points. While the load bearing supports 122 are required to bear the weight of the emergency recovery system 100, the load bearing supports 122 are configured to remain a predefined length under tension. The emergency recovery system 100 is configured to pull the load bearing supports 122 to steer the parasail 100. The one or more load bearing supports 122 remain taught during use of the parasail 110 and couple on the end opposite to the parasail 110 to one or more flight controls and actuators 108 within the emergency recovery system housing 102. The flight controls and actuators 108 include, for example, control surfaces (e.g. rudder(s), elevator(s), and/or aileron(s)), servo(s)), and systems for controlling the foregoing. The flight controls and actuators 108 are configured to pull or release the load bearing supports 122 as necessary to change the orientation of the parasail 110, effectively steering the parasail 110 and augmenting the course of the vehicle 10. In some examples, the flight controls and actuators 108 include servos attached to the one or more load bearing supports 122, where the servos are configured to pull and release the one or more load bearing supports 122 attached at the other end to the parasail 110, thus pulling and releasing portions of the parasail 110 changing the direction of the parasail 110. In some examples, the flight controls and actuators 108 steer the parasail 110 using servos within the emergency recovery system housing 102 coupled to the load bearing supports 122. The ERS housing 102 is configured to use a standard interface to affix to any one of a number of vehicles 10 without compromising the structure of the vehicle and without relying on the internal components of the vehicle. In some examples, the ERS housing 102 includes electronic or mechanical components designed to interact with the internal components of the vehicle, including but not limited to displays, emergency systems, propulsion mechanisms, e.g. engines, propellers, wheels, or turbines, and/or communication systems.

The parasail 110 is configured to be deployed using primary ballistics 116. The ballistics system 208 comprises one or more ballistics units and the electronics necessary to ignite and direct the one or more ballistics. In some examples, the parasail 110 releases in a two-step process: in the first step, one or more primary ballistics 116 attached to the compact parasail 110 fire orthogonal to the top of the vehicle 10, ideally vertically; in the second step, the parasail 110 is pulled from the ERS housing 108 and rapidly expands through the combination of forces of the primary ballistics 116 and surrounding air. In another example, a first set of primary ballistics 116 attached to the compact parasail 110 fire orthogonal to the top of the vehicle 10 separating the parasail from the ERS housing 102, and secondary ballistics 117 staggered in various stages to launch outward from compact parasail 110 separating along a plane parallel to the top of the vehicle 10, expanding the parasail 110 to full dimensions. In another example, the parasail 110 comprises a hollow core between layers of canopy 120 and can inflate using secondary ballistics 117 (not pictured in diagram) within the parasail 110, which may include compressed gasses within the canopy, controlled ballistic explosions, and/or another method of rapid inflation. In some examples, the parasail 110 comprises various layers of canopy 120 such that portions of the parasail 110 can inflate or take on a predefined shape when fully expanded.

Once the parasail 110 is deployed, a guidance system 216 actively steers the parasail 110 as the vehicle 10 and the parasail 110 fall to the ground. The guidance system 216 is coupled to and controls the vehicle flight controls and actuators 108. The flight controls and actuators 108 are used to control velocity (speed and direction) and acceleration of the emergency recovery system 100. In some examples, the flight controls and actuators 108 may include flight controls and actuators 108 on a vehicle 10 attached to the emergency recovery system 100.

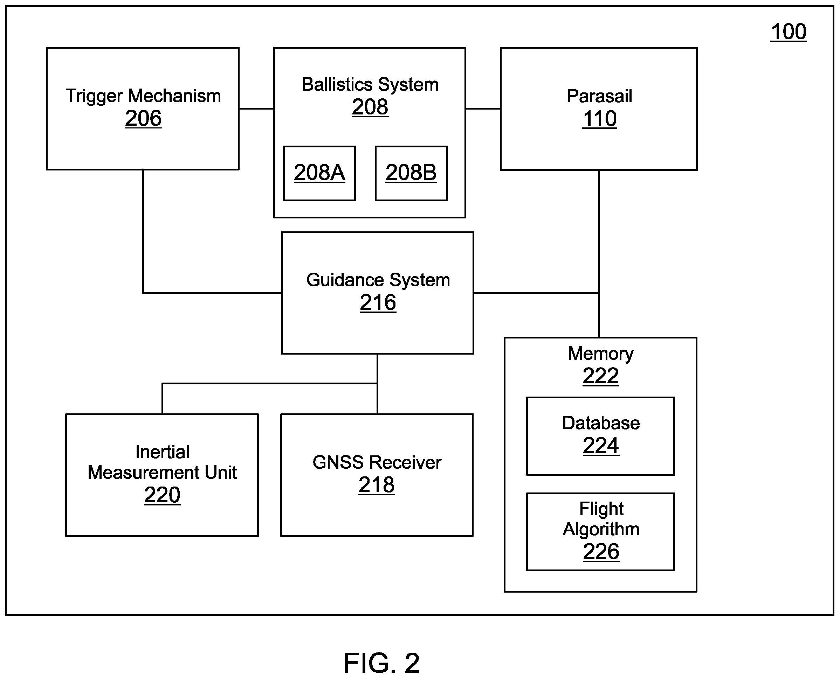

Figure 2 is a block diagram of the emergency recovery system 100. The emergency recovery system 100 comprises a guidance system 216 coupled to a trigger mechanism 206 and at least one of a Global Navigation Satellite System (GNSS) receiver 218, a memory 222, and an inertial measurement unit (IMU) 220. In some examples, the guidance system 216 relies on the GNSS receiver 218 to determine the location of the emergency recovery system 100. The GNSS receiver 218 receives signals from at least one satellite positioned in known positions above the earth. Using the at least one signal, the GNSS receiver 218 can determine three-dimensional geo-coordinates with a high degree of accuracy. The guidance system 216 is configured to receive the three-dimensional geo-coordinates of the emergency recovery system 100. In other examples, the guidance system 216 is configured to access a GNSS receiver 218 within the vehicle 10. In some examples, the guidance system 216 is configured to send and receive information with other navigational components (*e.g*. an altimeter, and an altitude and heading reference system (AHRS)). Other means of determining the three-dimensional position of the emergency recovery system 100 are considered, including but not limited to inertial navigation systems, optical positioning systems, and radar positioning systems. The guidance system 216 can use a non-GNSS positioning system as it would a GNSS receiver, receiving information regarding the position of the emergency recovery system 100 and the vehicle 10.

The guidance system 216 uses the three-dimensional position information in comparison to three-dimensional maps stored in a database 224 within the memory 222. In some examples, the three-dimensional maps are topographical diagrams of landing sites along the known route of the vehicle 10. As the vehicle 10 descends using the parasail 110, the guidance system 216 can use the three-dimensional map to determine an acceptable landing position for the vehicle 10. Furthermore, the guidance system 216 can determine potential obstacles in the descent path of the vehicle 10 and can steer the parasail 110 to avoid collision with the obstacle.

The emergency recovery system 100 is configured to be mountable to various types of vehicles, including aircraft. The emergency recovery system 100 may use the components of the vehicle; however, it is configured to be self-sufficient and may comprise elements necessary to power equipment, computers, and machinery as described. Furthermore, the emergency recovery system 100 may comprise systems redundant to those used by a given vehicle. In some examples, the emergency recovery system 100 may be configured to rely on the redundant systems of the vehicle where the equivalent system may or may not be present within the emergency recovery system 100. Such systems may include but should not be considered limited to a GNSS, an inertial measurement unit, and/or an altimeter.

In the example shown in Figure 2, a trigger mechanism 206 is coupled to a ballistics system 208 and to the guidance system 216. The trigger mechanism 206 may be configured to be activated by external activation such as through the press of a button or the flipping of a switch. Alternatively, the trigger mechanism 206 may be configured to activate automatically, such as sensors configured to detect failure of an external component. Upon receiving an input signal, the trigger mechanism 206 directs the ballistics system 208 to launch. In some embodiments the trigger mechanism 206 relies on the guidance system 216 and the inertial measurement unit 220 to determine whether the emergency recovery system 100 is upright, *e.g*. substantially facing away from the ground, before directing the ballistics system 208 to launch.

The ballistics system 208 comprises at least one primary ballistics element 208A (also referred to as the primary ballistics 116 in Figure 1) attached to the parasail 110. In some examples, the ballistics system 208 comprises at least one secondary ballistics element 208B (also referred to as the secondary ballistics 117 in Figure 1), wherein the secondary ballistics element 208B may be configured to activate after the primary ballistic element 208A. In some examples, the secondary ballistics element 208B includes a timing mechanism within the secondary ballistics 117 to delay activation from the primary ballistics 116. The ballistics system 208 is configured to pull the parasail 110 from its compact housing. In some examples, the ballistics system 208 consists of a small rocket attached to the parasail 110 configured to detach when the parasail 110 is fully expanded. In other examples, the ballistics system 208 consists of multiple ballistics attached to the corners of the parasail 110. The advantage of a ballistic parachute over a traditional parachute is that the ballistics eject the canopy away from the vehicle rapidly, reducing the amount of time it takes for the parachute to expand. A ballistic parasail functions largely in the same way, relying on the small ballistic explosion to rapidly expand to transition the vehicle 10 to a gliding state.

The inertial measurement unit 220 provides information to the other components about the attitude, heading, and orientation of the emergency recovery system 100 and the vehicle 10 to which the emergency recovery system 100 is attached. In some examples, the inertial measurement unit 220 includes at least one accelerometer, at least one gyroscope, altimeter, and/or at least one magnetometer. Each accelerometer measures acceleration along an axis. Each gyroscope measures angular rotation around an axis. Each magnetometer determines direction of an ambient magnetic field. The data from the inertial measurement unit 220 may be used to determine the orientation of the vehicle 10 in relation to the ground and can be used to determine when the top of the vehicle 10 is orthogonal to the earth. Furthermore, the inertial measurement 220 is used in conjunction with the trigger mechanism 206 to launch the primary ballistics 116 when the vehicle 10 is upright. The guidance system 216 may be configured with a range of angles off parallel to the ground to define upright. Thus, upright may include tolerance ranges within which the trigger mechanism 206 may be configured to launch the primary ballistics 116. The guidance system 216 may be configured to launch the primary ballistics 116 if the vehicle 10 is not upright if circumstances necessitate. For example, if the vehicle 10 is determined to be in a horizontal spin while upside-down. The ballistics system 208 may be configured to launch at a range of angles off normal to the top of the vehicle 10. For example, if the vehicle 10 is upright but tilted two degrees off axis, the ballistics system 208 may be configured to launch two degrees off normal to the top of the vehicle to compensate, such that the ballistics system 208 fires away from the earth along the axis of the earth's gravitational force.

For example, the memory 222 may be implemented with electronic analog circuitry, including circuitry used to implement electronic analog computers. A database 224 and a flight algorithm 226 may be stored within a memory or other non-transitory computer readable medium, hereinafter "the memory 130".

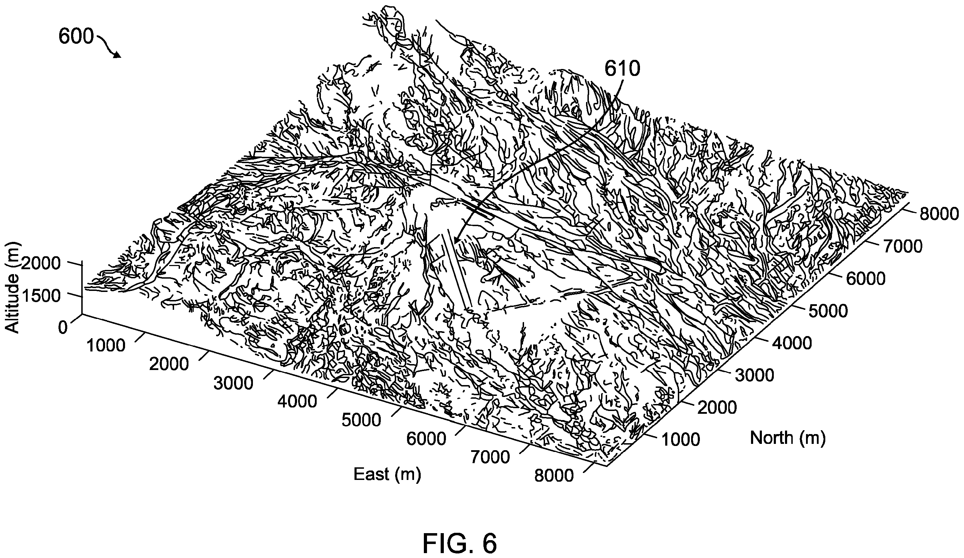

The database 224 stored within the memory 222 contains information of three-dimensional maps to which the position of the emergency recovery system 100 can be referenced to determine an appropriate landing site for the vehicle. In some embodiments, the database 224 is loaded with coordinate positions of suitable landing sties along the known path of the vehicle 10, such that for any point along the known path of the vehicle 10, a suitable landing site can be reached through a guided descent. In other examples, the database 224 contains coordinates of suitable landing sites in an area around where the vehicle 10 is determined to operate. For example, the database 224 may contain the coordinates of suitable landing sites in and around a greater metropolitan area. The database 224 may also contain information on three-dimensional maps (as further described in the example shown in Figure 6). These three-dimensional maps may be topographical representations of the area along the known flight path of the vehicle 10 or may be the general area around where the vehicle 10 is known to operate. The database 224 may be configured to update in real time in communication with off-board servers, or through periodic updates. The three-dimensional maps may include preferred suitable landing sites such as wide roads, airstrips, and fields. The guidance system 216 may be configured to determine a suitable landing site from a three-dimensional map in real time. Furthermore, the guidance system 216 may determine that a landing site is unacceptable, for example if an object obstructs the preferred landing site, in which case the guidance system 216 may seek an alternate landing site from the three-dimensional map which is determined to be within range of the emergency recovery system 100.

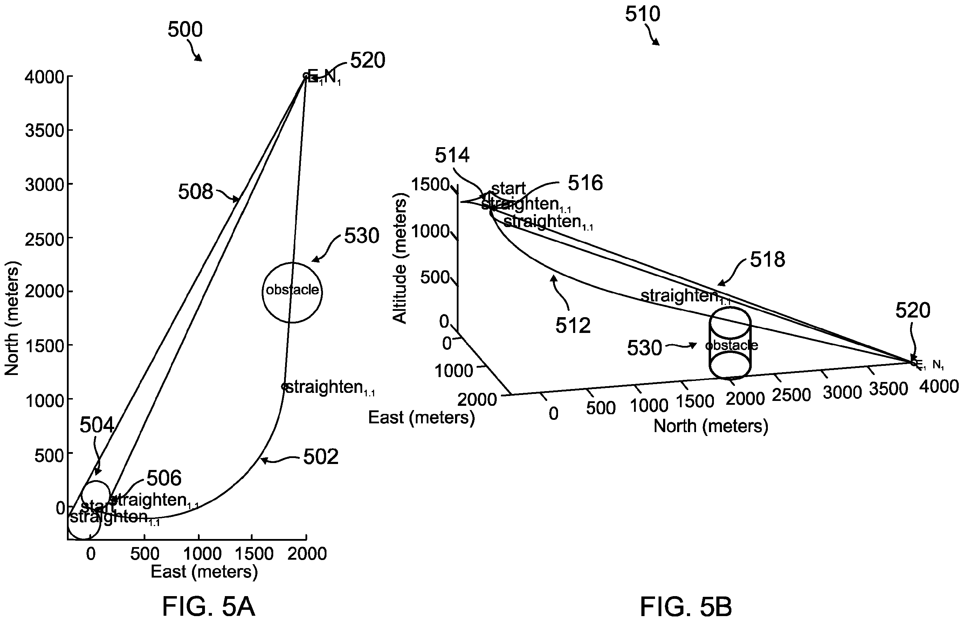

The flight algorithm 226 stored within the memory designates the path along which the emergency recovery system 100 directs the vehicle 10 towards a landing site. The flight algorithm 226 comprises a preloaded method to guide a vehicle from a given position and orientation towards a desired location. The flight algorithm 226 receives the position and attitude from other components within the emergency recovery system 110, for example the GNSS Receiver 218 and/or the inertial measurement unit 220. As the emergency recovery system 110 does not have any form of propulsion, the flight algorithm 226 must rely on manipulation of the parasail 110 for guidance. In one example (further described in Figures 5A and 5B), the flight algorithm 226 uses a series of curves and straight lines to position the vehicle in line with a landing site such that the vehicle will land on the landing site along a particular axis. For example, the flight algorithm 226 might direct the flight controls and actuators 108 to pull the parasail 110 such that the vehicle spirals in concentric circles to a given height, then releases the parasail 110 creating a wider spiral, and then further adjusting the parasail 110 such that the vehicle lands at the landing site along the desired path of the landing site, such as along a runway.

In some examples, the trigger mechanism 206 is configured to interact with the vehicle 10, as well as the emergency recovery system 100. The trigger mechanism 206 may be activated automatically or manually. In examples where the trigger mechanism 206 is automatic, the trigger mechanism may connect to a system in the vehicle 10 which indicates that emergency procedures are necessary. In examples where the trigger mechanism 206 is manual, a button, a switch and/or some other form of activation may be affixed within reach of the passengers and/or pilots of the vehicle 10. In some examples, the manual trigger may be off board the vehicle 10 in which case the trigger mechanism 206 may remotely activated. When the trigger mechanism 206 is activated, the emergency recovery system 100 implements at least the ballistics system 208 and may implement other systems. For example, the emergency recovery system 100 may initiate a crow bar mechanism 302, the function of which is explained in more detail below, within the vehicle 10.

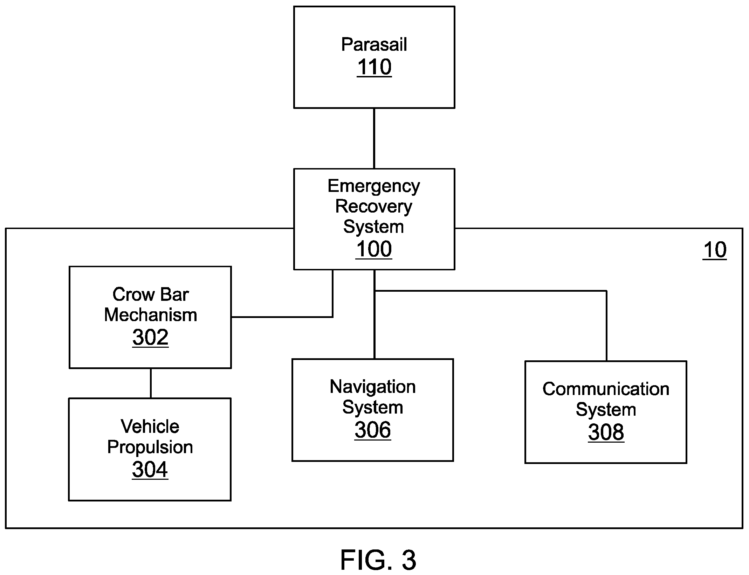

Figure 3 is a block diagram of an example of an emergency recovery system 100 within a vehicle 10. The emergency recovery system 100 is designed to interact with a wide array of vehicles including but not limited to urban air mobility units. Some components of the emergency recovery system 100 are designed to mount externally to the vehicle 10, such as the ERS housing 102 containing the parasail 110, and the ballistics system 208 While the ERS housing 102 may contain other components of the emergency recovery system 100 as described above, it is conceived that the above components may be incorporated into the vehicle 10 and/or the above components may be shared by the vehicle 10.

In the example shown in Figure 3, a crow bar mechanism 302 is coupled to the emergency recovery system 100, the trigger 140, and the vehicle propulsion 304 for example one or more engines, propeller, and/or turbines. When the trigger is activated, the crow bar mechanism 302 locks down the engines 204 and prevents the engines 204 from revolving and/or moving, since moving propellers would interfere with the parasail. The crow bar mechanism 302 function mechanically, electrically, and/or magnetically. For example, the crow bar mechanism 302 may involve a physical object being inserted into the revolving vehicle propulsion 304, physically jamming the vehicle propulsion 304. Alternatively, the crow bar mechanism 302 may involve the introduction electro-magnets placed around the vehicle propulsion, causing the vehicle propulsion to stop due to the increased force necessary to maintain revolutions.

In the example shown in Figure 3, the emergency recovery system 100 is coupled to the vehicle navigation system 306 and the vehicle communication system 308. The vehicle navigation system 306 may comprise a GNSS system, an inertial measurement unit, an altimeter, an attitude and heading unit, optical sensors and/or and radar sensors. The emergency recovery system 100 may be configured to rely on the vehicle navigation system 306 either as a redundancy to the components within the emergency recovery system 100, in conjunction with the components within the emergency recovery system 100, and/or instead of the components within the emergency recovery system 100. The vehicle communications system 308 may comprise one or more antenna, transceivers, radio units, and/or other communication devices. The emergency recovery system 100 may be configured to use the vehicle communications system 308 to notify AOC and/or AOT that the vehicle 10 is relying on the emergency recovery system 100 and/or the landing site designated by the emergency recovery system 100.

The parasail 110 is configured to guide the emergency recovery system 100 attached to a vehicle safely to the ground. In some examples, the emergency recovery system 100 has a desired landing site such as a runway or a designated emergency landing space, *e.g.* a river or a highway prior to activation. In other examples, the emergency recovery system 100 determines the desired landing site through algorithmic determinations, using the distance between the vehicle 10 and the landing site, the estimated distance travelable by the vehicle 10, and obstacles between the vehicle 10 and the landing site.

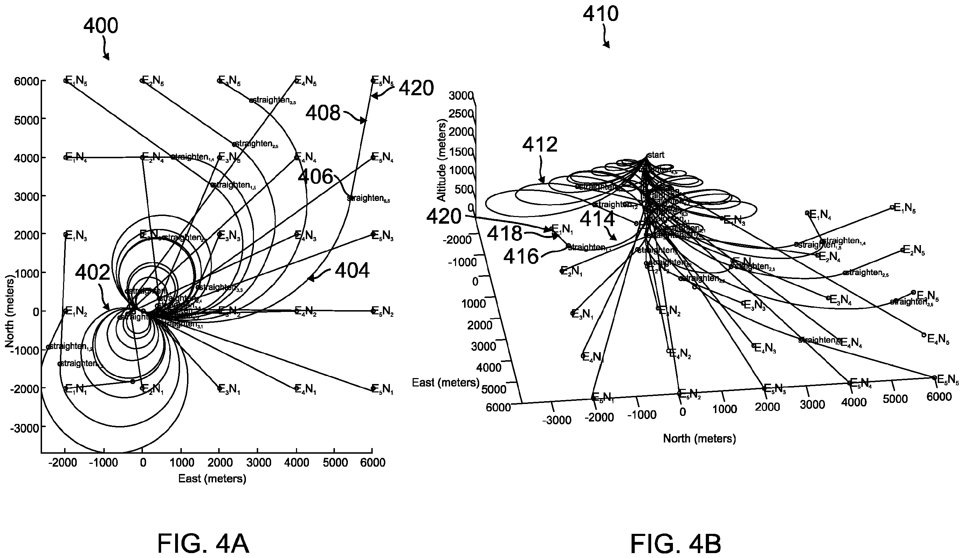

In the example shown in Figures 4A and 4B, paths of descent is shown. In Figure 4A, a birds-eye view of an example guidance and landing pattern is shown 400. In this example, the "y" axis represents the north-south direction in meters and the "x" axis represents the east-west direction in meters. This example depicts how the emergency recovery system 100 can direct the vehicle 10 in any particular direction without an independent propulsion mechanism. In some examples, the flight algorithm 226 stored in the memory 130 provides precomputed instructions to the guidance system 216 for a given landing site. In other examples, the guidance system 216 uses the flight algorithm 226 to actively determine the optimal path towards the landing site. In this example, the flight controls and actuators 108 steer the vehicle 10 in a circular arc 402 until the desired altitude has been reached. After the desired altitude has been reached, the circular arcs widens to a broader arc 404 until a desired trajectory has been met, for example at 406, at which point the flight controls and actuators 108 cause the vehicle 10 to enter a straight line flight pattern 408 toward the intended landing site 420. The flight controls and actuators create the various required arcs by pulling only one side of the canopy. This pulling of the load bearing supports 122 steers the vehicle in a natural curve based on the magnitude of the pull. The guidance system 216 is configured to determine the desired angle of approach and the from the desired angle of approach control the flight controls and actuators to implement the pulling of the canopy. If the vehicle 10 needs to reduce its altitude before the approach to a landing site, the guidance system 216 can instruct the flight controls and actuators 108 to conduct circular rotations, the wider the circle, the more altitude that is lost before the vehicle returns to its original orientation. The guidance system 216 can rely on any of the GNSS receiver, the inertial measurement unit 220, and/or the database 224 to determine the position of the vehicle 10 in relation to the potential landing sites.

Figure 4B shows a three-dimensional representation of the bird's eye view 410 shown in Figure 4A. The "z" axis shows altitude in meters, the "x" axis shows the east-west direction in meters, and the "y" axis shows the north-south direction in meters. In this example, the use of circular arcs 412 to reduce altitude before the final correction in the broader arc 414 to align the vehicle 10 along the proper trajectory before the vehicle 10 enters a straight-line flight pattern 418, at 416, towards the intended landing site 420 at the intended altitude. In some examples, the guidance system 216 factors in the angle of approach. The guidance system 216 can operate the flight controls and actuators 108 to reduce or increase the vertical angle of approach. In some examples, the guidance system 216 is configured to actively monitor the angle of approach in order to avoid obstacles.

In the example shown in Figures 5A and 5B, an obstacle 530 obstructs the path of the vehicle 10 in the "x"-"y" plane. Figure 5A, shows an example 500 of various paths the guidance and navigation system 216 may take in avoiding a collision with the obstacle 530. If the guidance system 216 were not able to control the angle of approach, the vehicle 10 may collide with the obstacle. For example, if vehicle 10 glides along one preferred path with a broad arc curve 502, the vehicle 10 would collide with the obstacle 530. In one example, the guidance system 216 avoids collision with the obstacle by performing circular arcs 504 until the desired altitude and trajectory is reached, for example at 506. This circular arc trajectory has the advantage of limiting the movement of the vehicle 10 within the horizontal plane, minimizing the chance that the vehicle 10 collides with an obstacle in an urban environment where buildings and structures occupy uniformly the horizontal planes along the landing path of an urban mobility vehicle configured to fly between buildings. When the desired altitude and trajectory is achieved, the flight controls and actuators 108 cause the vehicle 10 to enter a straight-line flight pattern 508 toward the intended landing site 520.

Figure 5B shows an example 510 of various paths the guidance system 216 may take in avoiding a collision with the obstacle 530. For example, if the vehicle 10 glides along one preferred path 512 with a broad arc curve, the vehicle may collide with the obstacle 530. In one example, the emergency recovery system 100 avoids collision with the obstacle 530 by determining a trajectory of flight which avoids collision with the obstacle 530 or any other obstacle. The guidance and navigation system then guides the vehicle 10 to a lower altitude using a repeated circular arc 514. This circular arc allows the emergency recovery system 100 to reduce the altitude of the vehicle 10 using a minimal amount of horizontal space. Once the vehicle reaches a preferred altitude, for example at 516, the vehicle 10 is guided directly to the landing site, for example at coordinates (2000, 4000, 0) 520, along a straight-line flight pattern 518.

In Figure 6, an example of a three-dimensional map 600 is shown. In this example, the three-dimensional map 600 is a topographical map depicting the area around an ideal landing site 610. In the example, the landing site 610 is a length of flat runway. The three-dimensional map 600 may show one or more landing sites 610, or in some examples a landing site 610 may not be present in which case the guidance system 216 can determine an appropriate landing location based on the terrain provided. Associated with the three-dimensional map may or may not be geo coordinates 620 at a given density associated with the area within the database 224. In the examples with geo coordinates, the guidance system 216 can utilize the location of various objects to determine whether the vehicle is on a collision course with an obstacle in the terrain. In some examples, the three-dimensional map 600 is accompanied by information, *e.g*. communication channels and known hazards such as telephone wires, about the particular location.

In the example shown in Figure 6, the length of runway 610 creates a preference for the guidance system 216 to land along the length of the runway 610. Using the methodology described in Figures 4 and 5, the guidance system 216 adjusts the descent of the vehicle 10 through a series of spiral-turns and straight descents until the vehicle 10 is on a descent towards the landing site 610. In some examples, the emergency recovery system would automatically provide a communication to the runway tower 640, if one is identified in the database 224, informing the runway tower 640 that the vehicle 10 was on a controlled descent and to keep the runway 610 clear.

For example, the guidance system 216 can use the three-dimensional map 600 stored within the memory 130 to determine a landing site for the vehicle 10. In this example, assuming that the vehicle 10 can reach any point on the three-dimensional map 600, the guidance system 216 may look for a relatively flat linear surface

In the example shown in in Figure 6, the three-dimensional map 600 contains 200,000 three-dimensional line segments, from an 8 kilometer-by-8 kilometer region of Earth's surface. At this resolution, a one meter-by-one meter requires 3.25 Megabytes. Thus, the amount of memory needed to store the Earth's entire land surface at this resolution is approximately 7.6 Terabytes. In some examples, the three-dimensional map loaded into the memory 130 of the vehicle contains the Earth's entire land surface with geo-coordinates associated with the three-dimensional map. Thus, the emergency recovery system 100 can identify a landing site anywhere on the Earth's land surface or waterways.

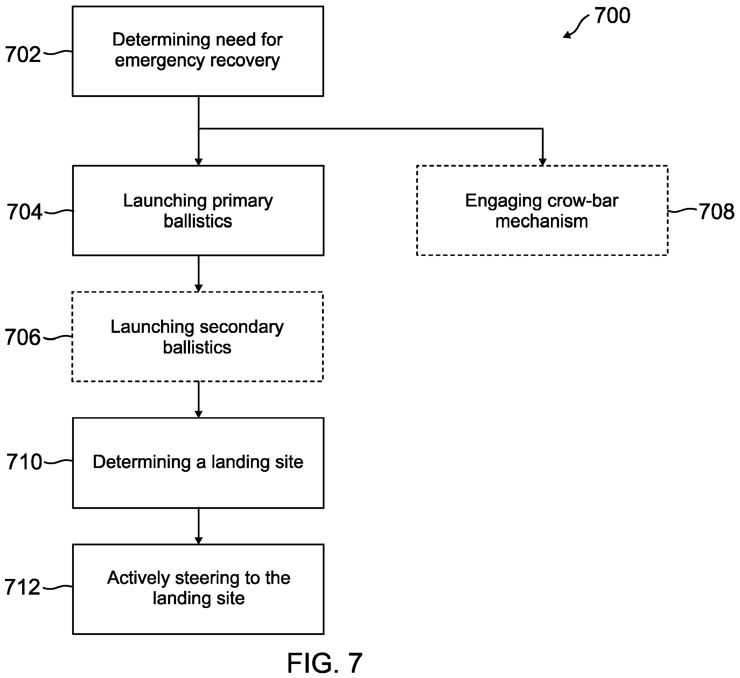

Figure 7 illustrates examples of a method 700 for utilizing an emergency recovery system in conjunction with a vehicle. To the extent that the embodiments of method 700 shown in Figure 7 is described herein as being implemented in the systems shown in Figures 1-3, it is to be understood that other embodiments can be implemented in other ways. Furthermore, to the extent that the embodiments of method 700 is described herein as using the methods shown in Figure 4-5, it is to be understood that other embodiments can be implemented in other ways. The blocks of the flow diagram have been arranged in a generally sequential manner for ease of explanation; however, it is to be understood that this arrangement is merely exemplary, and it should be recognized that the processing associated with some methods (and the blocks shown in the figures) can occur in a different order or simultaneously.

In block 702, determine whether emergency recovery is needed. In some examples, an operator or occupant of a vehicle attached to the emergency recovery system can activate the emergency recovery system using a button, switch, or other activation method. In some examples, a determination can be made in conjunction with the systems of the emergency recovery system of the vehicle. For example, if the vehicle's propulsion loses power, it may trigger an emergency recovery. Alternatively, a sensor may determine that the vehicle is losing altitude at an unsustainable rate, in which an emergency recovery may be triggered.

In block 704, launch the primary ballistics. The primary ballistics are configured to pull a parasail from the emergency recovery system housing so that the parasail can glide the emergency recovery system and attached vehicle to the ground. The primary ballistics can take many forms based on the configuration of the emergency recovery system. Generally, the primary ballistics provides sufficient force to rapidly deploy the parasail directly above the emergency recovery system, and thus directly above the vehicle. In some examples, the primary ballistics comprise one or more rockets coupled with detachable wires at various points on the parasail. In some examples, the primary ballistics also separate the housing such that the parasail and primary ballistics can expand outward unimpeded. When the parasail is fully expanded or in the process of expanding, the primary ballistics may be configured to detach from the parasail, may be configured to expend itself during ballistic propulsion, or may be configured to rest on the parasail without damaging the parasail. In some examples, secondary ballistics may launch as depicted in block 706. These secondary ballistics may share structural similarity with the primary ballistics. The secondary ballistics are configured to attach to the parasail to expand the parasail outward to its full area. In some examples, the secondary ballistics attached to the corners of the parasail pull the parasail outward. In some examples, the secondary ballistics reside within a hollow parasail and rapidly inflate the parasail upon activation. The secondary ballistics are configured to activate either after an amount of time after the activation of the primary ballistics or based on some inertial or positional trigger.

In block 708, a crow-bar mechanism may be engaged. The crow-bar mechanism comprises a hard shut off of the propulsion mechanism of the vehicle. For example, the crow bar mechanism may comprise a magnetic, electrical, or physical brake on an engine. In a further example, metal bars, for example resembling crow-bars, may be inserted into the propulsion means, for example a propeller, stopping any rotation. When an emergency recovery is deemed necessary, it may benefit the operation of the primary ballistics and expansion of the parasail to cease the propulsion of the vehicle. In examples where the crow bar mechanism is enacted, the emergency recovery system is integrated with the vehicle. Ideally, the crow bar mechanism can rapidly halt the propulsion of the vehicle without severely damaging the vehicle; however, for many vehicles that may not be the case. In those cases, a modified deceleration system for the engine can decelerate the engine at the maximum rate that will not cause damage.

In block 710, determine a landing site. The emergency recovery system determined a landing site from data either stored within the emergency recovery system, within the vehicle, or within remote system. As the path of the vehicle may be known, ideal landing sites may be predetermined along the predicted path of the vehicle. In other examples, topographical maps may be installed which would allow the emergency recovery system to make a determination of a landing site based on the three-dimensional position of the vehicle. For further detail on the three-dimensional map, see the description of Figure 6.

In block 712, actively steer to the landing site. Once the parasail is expanded, the parasail is steered using actuators on the emergency recovery housing attached via load bearing supports to the parasail. The load bearing supports are pulled and released, changing the direction of the parasail and thus guiding the glide of the emergency recovery system. The emergency recovery system may use one or more of the methods described in Figures 4A, 4B, 5A, and 5B. By gliding the vehicle using curved arcs, the emergency recovery system can guide the vehicle to the determined landing site, while applying a constant aerodynamic load to the vehicle and its occupants.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be defined by the claims.

## Claims

1. A recovery system (100), comprising:
a housing (102);
a parasail (110) comprising a canopy coupled within the housing (102) fastened by a releasable fastener, wherein the parasail is compressed into a compact mass and is configured to expand;
a guidance system (216);
an inertial measurement unit (220);
primary ballistics (116) attached to the parasail (110), wherein the primary ballistics (116) are configured to launch and deploy the parasail (110) from the housing (102) such that the parasail is able to suspend an air vehicle (10) before the vehicle (10) has a chance to fall due to gravity; and
a trigger mechanism (206) that is configured to be activated, and to direct the primary ballistics (116) to launch after receiving an indication from the guidance system (216) and from the inertial measurement unit (220) whether the vehicle (10) is substantially upright and thereby in a state for safe deployment of the recovery system (100); and
wherein the guidance system (216) is further configured to steer the vehicle (10) to a landing site (420, 520, 610).

2. The recovery system (100) of claim 1, further comprising a database (224) containing data for a three-dimensional map (600) including data on one or more known landing sites (420, 520, 610), wherein when the recovery system (100) is activated, the guidance system (216) is configured to select one of the one or more known landing sites (420, 520, 610) from the three-dimensional map (600) in the database (224) to steer the vehicle (10) to one of the one or more known landing sites (420, 520, 610).

3. The recovery system (100) of claim 2, wherein the three-dimensional map (600) is periodically updated.

4. The recovery system (100) of any of the preceding claims, further comprising secondary ballistics (117) attached to the parasail (110), wherein the secondary ballistics (117) are configured to activate after the primary ballistics (116) and to stretch corners of the parasail (110).

5. The recovery system (100) of any of the preceding claims, wherein the guidance system (216) is configured to determine whether the vehicle (10) is upright based on at least one of an attitude, a heading, and an orientation of the vehicle (10).

6. The recovery system (100) of any of the preceding claims, wherein the trigger mechanism (206) directs the primary ballistics (116) to launch at an angle selected to compensate when the vehicle (10) is not upright.

7. The recovery system (100) of any of the preceding claims, wherein the guidance system (216) is configured to receive geo-coordinates of the recovery system (100) from a Global Navigation Satellite System, GNSS, receiver (218) of the vehicle (10).

8. The recovery system (100) of any of the preceding claims, further comprising a crow-bar mechanism (302) configured to be coupled to at least one propulsion mechanism (304), wherein the crow-bar mechanism (302) is configured to stop the at least one propulsion mechanism (304) upon activation of the recovery system (100).

9. A method (700) for the recovery system (100) of claim 1, the method comprising:
determining (702), by the guidance system (216), a need for an emergency recovery of the air vehicle (10);
determining, by the inertial measurement unit (220), whether the vehicle is substantially upright before launching primary ballistics;
launching (704) primary ballistics by the trigger mechanism (206), pulling a parasail vertically away from the vehicle, wherein launching (706) the primary ballistics includes launching and deploying the primary ballistics before the vehicle (10) has a chance to fall due to gravity; and
actively steering (712) the vehicle to a landing site.

10. The method (700) of claim 9, further comprising launching (706) secondary ballistics after the primary ballistics, wherein the secondary ballistics are configured to expand the parasail and to stretch corners of the parasail.

11. The method (700) of claim 9 or 10, further comprising:
accessing data from a periodically updated three-dimensional map; and
determining (710) a safe path to the landing site or a landing site for the vehicle based on the accessed data

12. The method (700) of claim 11, wherein determining (710) a safe path to a landing site or a landing site includes identifying potential obstacles in a descent path and selecting a path that avoids the potential obstacles.

13. The method (700) of any of claims 9 to 12, further comprising engaging (708) a crow-bar mechanism to stop at least one propulsion mechanism of the vehicle upon activation of the recovery system.

## Patentansprüche

1. Bergungssystem (100), umfassend:
ein Gehäuse (102);
einen Gleitschirm (110), der eine Kuppel umfasst, die innerhalb des Gehäuses (102) gekoppelt und durch einen lösbaren Verschluss befestigt ist, wobei der Gleitschirm zu einer kompakten Masse komprimiert ist und konfiguriert ist, um sich auszubreiten;
ein Führungssystem (216);
eine Trägheitsmesseinheit (220);
Primärballistik (116), die am Gleitschirm (110) befestigt ist, wobei die Primärballistik (116) konfiguriert ist, um den Gleitschirm (110) vom Gehäuse (102) zu starten und zu entfalten, sodass der Gleitschirm in der Lage ist, ein Luftfahrzeug (10) aufzuhängen, bevor das Fahrzeug (10) aufgrund der Schwerkraft fallen kann; und
einen Auslösemechanismus (206), der konfiguriert ist, um aktiviert zu werden und die Primärballistik (116) anweist, zu starten, nachdem er eine Angabe vom Führungssystem (216) und von der Trägheitsmesseinheit (220) empfangen hat, ob das Fahrzeug (10) im Wesentlichen aufrecht und dadurch in einem Zustand zum sicheren Entfalten des Bergungssystems (100) ist; und
wobei das Führungssystem (216) ferner konfiguriert ist, um das Fahrzeug (10) zu einem Landeplatz (420, 520, 610) zu lenken.

2. Bergungssystem (100) nach Anspruch 1, das ferner eine Datenbank (224) umfasst, die Daten für eine dreidimensionale Karte (600) enthält, die Daten zu einem oder mehreren bekannten Landeplätzen (420, 520, 610) einschließt, wobei dann, wenn das Bergungssystem (100) aktiviert ist, das Führungssystem (216) konfiguriert ist, um einen von dem einen oder den mehreren bekannten Landeplätzen (420, 520, 610) aus der dreidimensionalen Karte (600) in der Datenbank (224) auszuwählen, um das Fahrzeug (10) zu einem von dem einen oder den mehreren bekannten Landeplätzen (420, 520, 610) zu lenken.

3. Bergungssystem (100) nach Anspruch 2, wobei die dreidimensionale Karte (600) periodisch aktualisiert wird.

4. Bergungssystem (100) nach einem der vorhergehenden Ansprüche, das ferner Sekundärballistik (117) umfasst, die am Gleitschirm (110) befestigt ist, wobei die Sekundärballistik (117) konfiguriert ist, um nach der Primärballistik (116) aktiviert zu werden und die Ecken des Gleitschirms (110) zu strecken.

5. Bergungssystem (100) nach einem der vorhergehenden Ansprüche, wobei das Führungssystem (216) konfiguriert ist, um zu bestimmen, ob das Fahrzeug (10) aufrecht ist, basierend auf mindestens einem von einer Lage, einem Kurs und einer Ausrichtung des Fahrzeugs (10).

6. Bergungssystem (100) nach einem der vorhergehenden Ansprüche, wobei der Auslösemechanismus (206) die primäre Ballistik (116) anweist, in einem Winkel zu starten, der ausgewählt ist, um zu kompensieren, wenn das Fahrzeug (10) nicht aufrecht ist.

7. Bergungssystem (100) nach einem der vorhergehenden Ansprüche, wobei das Führungssystem (216) konfiguriert ist, um Geokoordinaten des Bergungssystems (100) von einem Empfänger (218) eines Globalen Navigationssatellitensystems, GNSS des Fahrzeugs (10) zu empfangen.

8. Bergungssystem (100) nach einem der vorhergehenden Ansprüche, das ferner einen Brechstangenmechanismus (302) umfasst, der konfiguriert ist, um mit mindestens einem Vortriebsmechanismus (304) gekoppelt zu werden, wobei der Brechstangenmechanismus (302) konfiguriert ist, um den mindestens einen Vortriebsmechanismus (304) bei Aktivierung des Bergungssystems (100) anzuhalten.

9. Verfahren (700) für das Bergungssystem (100) nach Anspruch 1, wobei das Verfahren umfasst:
Bestimmen (702), durch das Führungssystem (216), einer Notwendigkeit für eine Notfallbergung des Luftfahrzeugs (10);
Bestimmen durch die Trägheitsmesseinheit (220), ob das Fahrzeug im Wesentlichen aufrecht ist, bevor Primärballistik gestartet wird;
Starten (704) der Primärballistik durch den Auslösemechanismus (206), Ziehen eines Gleitschirms vertikal vom Fahrzeug weg, wobei das Starten (706) der Primärballistik das Starten und Entfalten der Primärballistik umfasst, bevor das Fahrzeug (10) aufgrund der Schwerkraft fallen kann; und
aktives Lenken (712) des Fahrzeugs zu einem Landeplatz.

10. Verfahren (700) nach Anspruch 9, das ferner das Starten (706) von Sekundärballistik nach der Primärballistik umfasst, wobei die Sekundärballistik konfiguriert ist, um den Gleitschirm auszubreiten und die Ecken des Gleitschirms zu strecken.

11. Verfahren (700) nach Anspruch 9 oder 10, ferner umfassend:
Zugreifen auf Daten von einer periodisch aktualisierten dreidimensionalen Karte; und
Bestimmen (710) eines sicheren Weges zum Landeplatz oder einem Landeplatz für das Fahrzeug basierend auf den zugegriffenen Daten

12. Verfahren (700) nach Anspruch 11, wobei das Bestimmen (710) eines sicheren Weges zu einem Landeplatz oder einem Landeplatz das Identifizieren potenzieller Hindernisse auf einem Gleitweg und das Auswählen eines Weges umfasst, der die potenziellen Hindernisse vermeidet.

13. Verfahren (700) nach einem der Ansprüche 9 bis 12, das ferner das Ineingriffbringen (708) eines Brechstangenmechanismus umfasst, um mindestens einen Vortriebsmechanismus des Fahrzeugs bei Aktivieren des Bergungssystems anzuhalten.

## Revendications

1. Système de récupération (100) comprenant :
un boîtier (102) ;
un parachute ascensionnel (110) comprenant une voilure accouplée à l'intérieur du boîtier (102) et fixée par une attache détachable, le parachute ascensionnel étant comprimé en une masse compacte et conçu pour se déployer ;
un système de guidage (216) ;
une unité de mesure inertielle (220) ;
une balistique primaire (116) attachée au parachute ascensionnel (110), la balistique primaire (116) étant conçue pour lancer et pour déployer le parachute ascensionnel (110) à partir du boîtier (102) pour permettre au parachute ascensionnel de suspendre un véhicule aérien (10) avant que le véhicule (10) ne risque de tomber à cause de la gravité ; et
un mécanisme de déclenchement (206), conçu pour être activé et pour provoquer le lancement de la balistique primaire (116) après réception d'une indication provenant du système de guidage (216) et de l'unité de mesure inertielle (220) si le véhicule (10) est sensiblement droit et donc en état permettant un déploiement sûr du système de récupération (100) ; et
le système de guidage (216) étant en outre conçu pour diriger le véhicule (10) jusqu'à un site d'atterrissage (420, 520, 610).

2. Système de récupération (100) selon la revendication 1, comprenant en outre une base de données (224) contenant des données destinées à une carte tridimensionnelle (600) comportant des données sur un ou plusieurs sites connus d'atterrissage (420, 520, 610), et lors de l'activation du système de récupération (100), le système de guidage (216) étant conçu pour sélectionner l'un parmi le ou les sites connus d'atterrissage (420, 520, 610) de la carte tridimensionnelle (600) dans la base de données (224) pour diriger le véhicule (10) jusqu'à l'un parmi le ou les sites connus d'atterrissage (420, 520, 610).

3. Système de récupération (100) selon la revendication 2, dans lequel la carte tridimensionnelle (600) est périodiquement mise à jour.

4. Système de récupération (100) selon l'une quelconque des revendications précédentes, comprenant en outre une balistique secondaire (117) attachée au parachute ascensionnel (110), la balistique secondaire (117) étant conçue pour s'activer après la balistique primaire (116) et pour étirer les coins du parachute ascensionnel (110).

5. Système de récupération (100) selon l'une quelconque des revendications précédentes, dans lequel le système de guidage (216) est conçu pour déterminer si le véhicule (10) est droit d'après un élément parmi une attitude, un cap et une orientation du véhicule (10).

6. Système de récupération (100) selon l'une quelconque des revendications précédentes, dans lequel le mécanisme de déclenchement (206) provoque le lancement de la balistique primaire (116) selon un angle sélectionné pour compenser lorsque le véhicule (10) n'est pas droit.

7. Système de récupération (100) selon l'une quelconque des revendications précédentes, dans lequel le système de guidage (216) est conçu pour recevoir des coordonnées géographiques du système de récupération (100) d'un récepteur de système mondial de navigation par satellite, GNSS, (218) du véhicule (10).

8. Système de récupération (100) selon l'une quelconque des revendications précédentes, comprenant en outre un mécanisme de pince à levier (302), conçu pour être accouplé à au moins un mécanisme de propulsion (304), le mécanisme de pince à levier (302) étant conçu pour arrêter l'au moins un mécanisme de propulsion (304) lors de l'activation du système de récupération (100).

9. Procédé (700) destiné au système de récupération (100) selon la revendication 1, le procédé comprenant :
la détermination (702), par le système de guidage (216), d'un besoin de récupération d'urgence du véhicule aérien (10) ;
le fait de déterminer, par l'unité de mesure inertielle (220), si le véhicule est sensiblement droit avant le lancement de la balistique primaire ;
le lancement (704) de la balistique primaire par le mécanisme de déclenchement (206), par éloignement vertical d'un parachute ascensionnel du véhicule, le lancement (706) de la balistique primaire comportant le lancement et le déploiement de la balistique primaire avant que le véhicule (10) ne risque de tomber à cause à la gravité ; et
le fait de diriger activement (712) le véhicule jusqu'à un site d'atterrissage.

10. Procédé (700) selon la revendication 9, comprenant en outre le lancement (706) d'une balistique secondaire après la balistique primaire, la balistique secondaire étant conçue pour étendre le parachute ascensionnel et pour étirer les coins du parachute ascensionnel.

11. Procédé (700) selon la revendication 9 ou 10, comprenant en outre :
l'accès aux données d'une carte tridimensionnelle mise à jour périodiquement ; et
la détermination (710) d'un chemin sûr jusqu'au site d'atterrissage ou d'un site d'atterrissage pour le véhicule d'après les données consultées.

12. Procédé (700) selon la revendication 11, dans lequel la détermination (710) d'un chemin sûr jusqu'à un site d'atterrissage ou d'un site d'atterrissage comporte l'identification d'obstacles potentiels dans un chemin de descente et la sélection d'un chemin évitant les obstacles potentiels.

13. Procédé (700) selon l'une quelconque des revendications 9 à 12, comprenant en outre l'actionnement (708) d'un mécanisme de pince à levier pour arrêter au moins un mécanisme de propulsion du véhicule lors de l'activation du système de récupération.
